# EUROPEAN PATENT SPECIFICATION

(11) **EP 1 871 512 B1**
(45) Date of publication and mention of the grant of the patent: **28.12.2011**
(21) Application number: 06734034.9
(22) Date of filing: 27.01.2006
(51) Int. Cl.: B01D 35/30, B01D 29/56, B01D 61/02, C02F 1/44

(54) **Threaded locking mechanism between filter head and filter cartridge**
Schraubanschluss zwischen Filterkopf und Filterkartusche
Fermeture à vis entre une base de filtre et une cartouche de filtre

(30) Priority: 27.01.2005 US 647680 P
(43) Date of publication of application: 02.01.2008
(60) Divisional application: 09181002.8
(73) Proprietor: EcoWater Systems, LLC, Woodbury, MN 55125 (US)
(72) Inventor: Kennedy, Gregory, Maplewood, MN 55177 (US); Sinkula, David, Coon Rapids, MN 55433 (US); Zimmermann, Jeffrey, Forest Lake, MN 55025 (US); Khamis, Chaouki, Edina, MN 54424 (US); Stoick, Michael, New Market, MN 55054 (US); Dusheck, Nathan, Hammond, WI 64015 (US)
(74) Representative: Volpert, Marcus
(86) International application number: PCT/US2006/003172
(87) International publication number: WO 2006/081542

(56) References cited:
- WO-A-01/80967
- WO-A-02/12124
- US-A- 4 587 518
- US-A- 4 915 831
- US-A- 5 405 528
- US-A- 5 744 030
- US-A- 5 779 911
- US-A1- 2002 046 556
- US-A1- 2006 144 765

## Description

### FIELD OF INVENTION

The present invention relates to water treatment systems and, in particular, to such systems having an encapsulated manifold head and a reverse osmosis cartridge and one or more filter cartridges.

### BACKGROUND OF THE INVENTION

Reverse osmosis systems are known. The main part of the system is a semipermeable membrane through which the untreated water passes. Such systems typically include an additional carbon or ceramic filter which removes contaminates either prior to passing through the membrane or after. Such systems are often installed in residential applications.

The prior art includes electronic systems which detect when the reverse osmosis membrane requires replacement. Typical prior art systems include measuring the conductivity of the water entering the reverse osmosis cartridge, and then measuring the conductivity of the water at the outlet of the reverse osmosis cartridge. The conductivity of the water is proportional to the total dissolved solids. A ratio of the conductivity level will provide an indication of the rejection efficiency of the reverse osmosis membrane.

Prior art systems also include an application wherein a permeate pump is included in a factory installation. The permeate pump provides greater efficiency in the system. The permeate pump increases the net pressure across the reverse osmosis membrane by isolating the membrane pressure from the pressure in the products water and thus reducing the permeate back pressure.

The prior art also includes systems which address reducing the spillage of fluid occurring during replacement of the cartridges.

The document W0 02/12124 A2 discloses a connection between a manifold and a membrane filter unit, using an externally threaded connection boss, downwardly extending form the underside of the manifold, for threaded connection with a corresponding inner thread provided in an annular collar of the housing of the filter unit.

### SUMMARY OF THE INVENTION

It is an object of the present invention to provide an improved locking mechanism for a filter cartridge and manifold head. The present invention is defined in claim 1.

It is a further object of the present application to provide an improved method of monitoring the performance of a reverse osmosis membrane in a drinking water supply system.

It is further object of the present application to provide a modular manifold head system.

It is an object of the present application to provide a system for retrofitting a reverse osmosis filter system to include a permeate pump application.

It is an object of the present application to provide a cartridge which has a reduced inlet opening to reduce spillage during changing of the cartridge.

The present invention can be further improvend by:

The locking mechanism of the invention, wherein the longitudinal extending bead engages the annular lip approximately 1/8 of a turn prior to the fully secured position.

The locking mechanism of the invention, wherein the longitudinal extending bead has a length and includes a leading end which is longitudinally spaced apart from the manifold a first distance with the cartridge in the fully secured position, and a second distance with the cartridge approximately 1/8 of a turn prior to the fully secured position, and wherein the difference between the first distance and the second distance is approximately the length of the longitudinal extending bead.

The locking mechanism of the invention, wherein each connection fitting includes a double lead thread having a circumference, a first thread and a second thread, the first and second threads being interwoven and extending around approximately of the circumference, wherein the first thread is offset from the second thread approximately 180 degrees.

The locking mechanism of the invention wherein the manifold includes four longitudinal slots extending from the lip along a portion of the annular collar and equally spaced apart circumferentially about the annular collar, and the cartridge includes four longitudinal extending beads extending along the cylindrical wall, the four longitudinal extending beads are equally spaced about the cylindrical wall, each of the longitudinal extending beads is adapted to be received by a respective slot with the cartridge in the fully secured position.

### BRIEF DESCRIPTION OF THE DRAWINGS

Fig. 1 is a perspective view of a water treatment system with a reverse osmosis cartridge and two filter cartridges.
Fig. 2 is a perspective view of a filter cartridge of Fig. 1.
Fig. 3 is a top view of the filter cartridge of Fig. 2.
Fig. 4 is an exploded view of the filter cartridge of Fig. 2.
Fig. 5 is a bottom perspective view of a manifold head incorporated in the water treatment system of Fig. 1.
Fig. 6 is a block diagram of a reverse osmosis membrane monitoring system.
Fig. 7 is a process flow chart for the system of Fig. 6.
Fig. 8 is a perspective view of a modular manifold head system.
Fig. 9 is top perspective view of a modular manifold head.
Fig. 10 is a schematic diagram of a reverse osmosis water treatment system with a permeate pump.
Fig. 11 is a cross-sectional view of the modular manifold head and cartridges of Fig. 1.
Fig. 12 is a top perspective view of a modular manifold head in a permeate pump application.

### DETAILED DESCRIPTION OF THE INVENTION

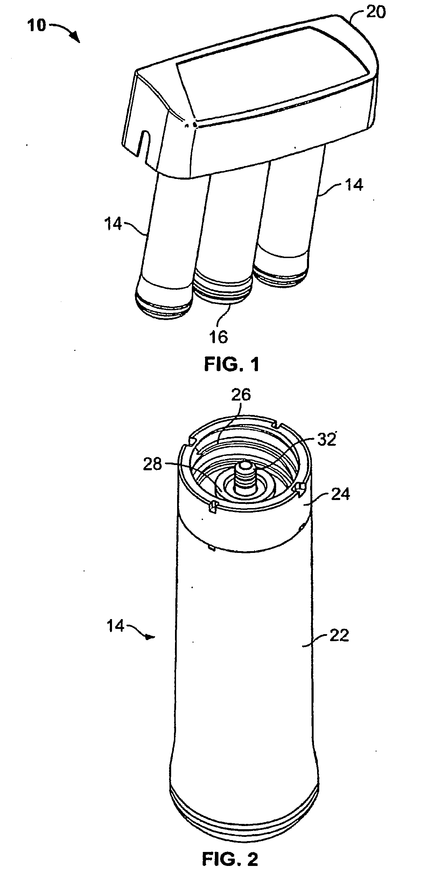

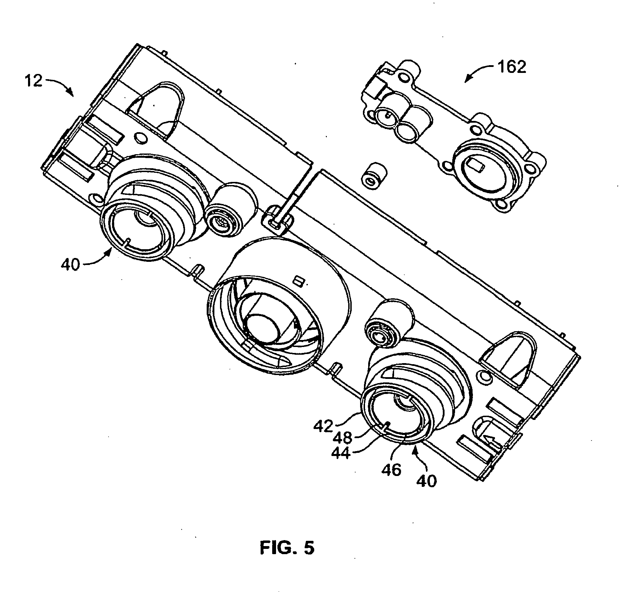

Fig. 1 shows one embodiment of a water treatment system 10 in accordance with the present invention. The system includes a manifold head 12, (see Fig. 5) a first filter cartridge 14, a reverse osmosis cartridge 16 and a second filter cartridge 14. A manifold cover 20 is also shown.

Fig. 2 shows a filter cartridge 14 in accordance with the present invention. The filter cartridge 14 includes a housing 22 having an outer annular collar 24 with a double lead thread 26. An inner annular collar 28 is also shown which includes an O ring 30 to provide a seal. A connection fitting 32 is shown extending through the annular collar 28.

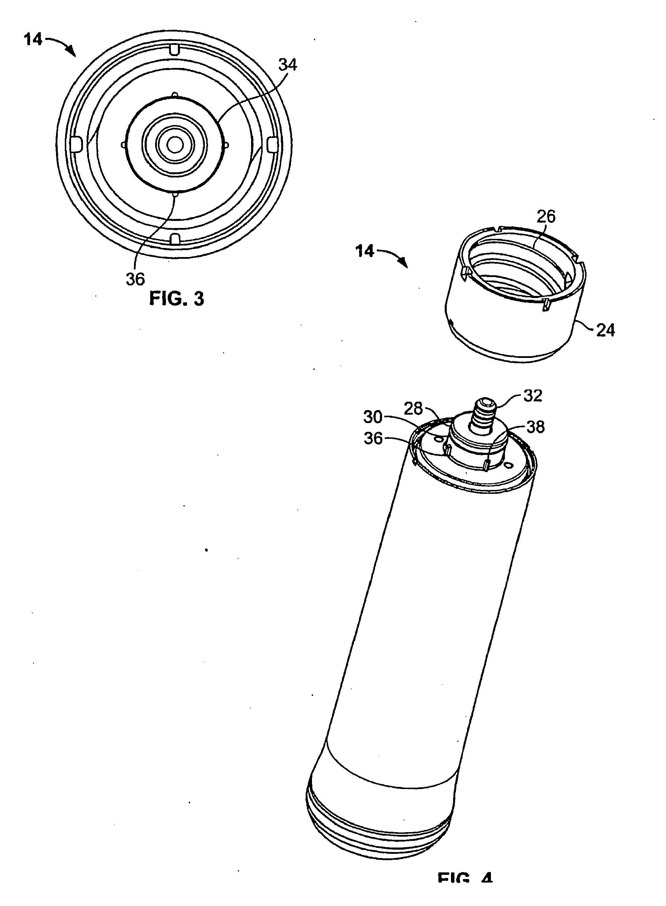

Fig. 3 shows a top view of the filter cartridge 14 and shows the cylindrical wall 34 of the inner annular collar 28, as well as the longitudinal extending bead 36.

Fig. 4 shows the filter cartridge 14 in an exploded view so as to more clearly show the longitudinal extending bead 36. It can be seen that the longitudinal extending bead 36 includes a leading end 38.

Fig. 5 shows the manifold head 12 having the filter cartridge connection fitting 40. The filter cartridge connection fitting 40 includes a threaded outer annular collar 42 and an inner annular collar 44. The inner annular collar 44 having an annular lip 46 and four longitudinal slots 48. The longitudinal slots 48 are equally spaced apart from one another.

It will be appreciated that when the filter cartridge 14 is rotated into a fully secured position onto the connection fitting 40, the filter cartridge 14 comes to rest with the longitudinal extending beads 36 being received by the respective slot 48.

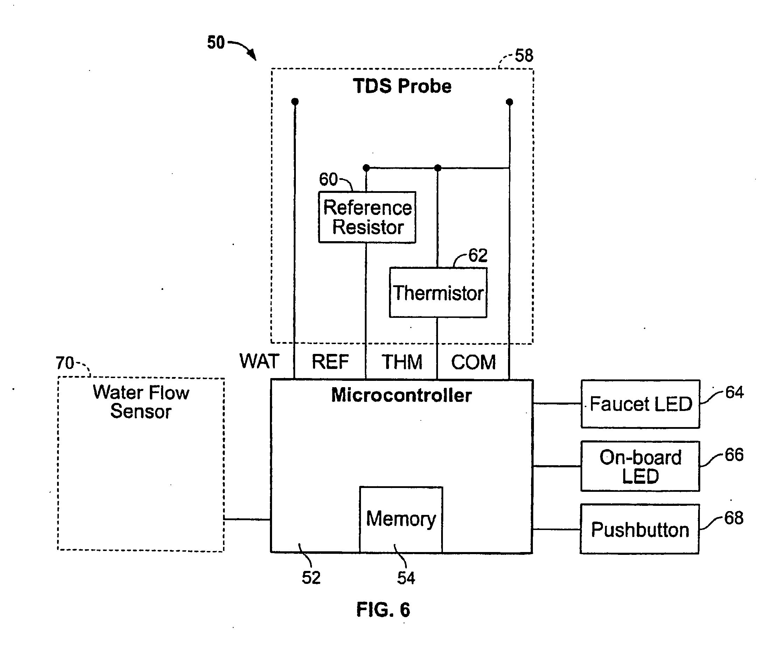

Fig. 6 shows a block diagram of a system 50 for monitoring the performance of a reverse osmosis membrane. The system 50 includes a microcontroller 52 having a memory 54 wherein a program resides. The system 50 includes a single probe set 58 which is located downstream of the reverse osmosis membrane. The probe set 58 includes a reference resistor 60 and a thermal resistor 62. The microcontroller 52 is coupled to a faucet LED 64 for providing an indication to replace the reverse osmosis cartridge. The microcontroller 52 is also coupled to an onboard LED 66 for feedback during operation of an onboard push button 68 also coupled to the microcontroller 52. A water flow sensor 70 is also coupled to the microcontroller 52.

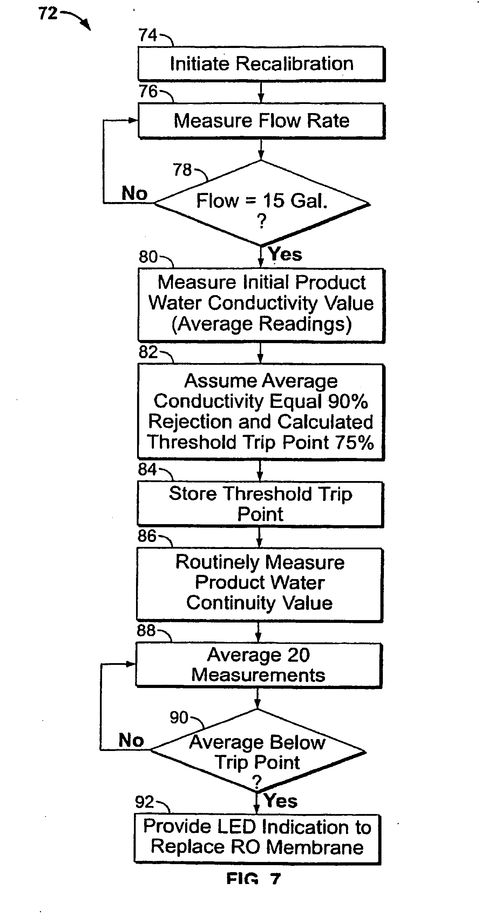

Fig. 7 shows a block diagram 72 which represents the functional steps as executed by the program resident in the memory 54.

Step 74 provides the initiate recalibration routine. The initiate recalibration routine occurs after the reverse osmosis membrane has been replaced and after a power on routine occurs. At step 76, the system measures the flow of water through the system. At step 78, the system determines or detects the flow of fifteen gallons of water through the system. At step 80, the system measures the initial water conductivity downstream of the reverse osmosis membrane. In one embodiment, step 80 the initial product water conductivity value is based on averaging approximately 10-50 water conductivity measurements. At step 82, the product water conductivity value or average conductivity is assumed to equal a 90% rejection. Step 82 then calculates a threshold trip point based on 75% rejection. Step 84 stores the threshold trip point. Step 86 consists of routinely measuring the product water conductivity value. Step 88 consists of averaging the previous twenty measurements of the water conductivity. At Step 90, it is determined whether the average of step 88 is below the threshold trip point of step 84. In the event the average is below the threshold trip point, the system proceeds to step 92 which provides an LED indication to replace the reverse osmosis membrane.

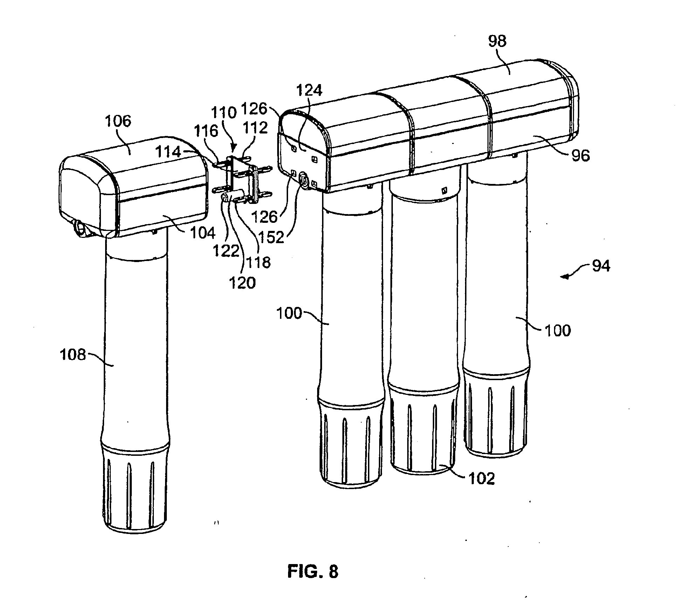

Figure 8 is an embodiment of a modular water treatment system 94. The water treatment system 94 shown in Fig. 8 includes a modular manifold head 96, a manifold cover 98, a first filter cartridge 100, a reverse osmosis cartridge 102 and a second filter cartridge 100. Also shown is a further modular manifold head 104 and cover 106, as well as an additional cartridge unit 108. The system of Fig. 8 provides a modular system wherein additional modular manifold units 104, 106, 108 may be coupled to the water treatment system 94 via a clip 110. The clip 110 includes a plurality of arms 112 extending from a planar body portion 114. Each arm 112 includes a slot 116 and a slanted leading edge 118. The clip 110 also includes a tubular portion 120 extending through the main body portion 114. The tubular portion 120 includes a bore 122 extending throughout the tubular portion 120.

Each manifold 12, 96, 104 includes an end wall 124 having four openings 126.

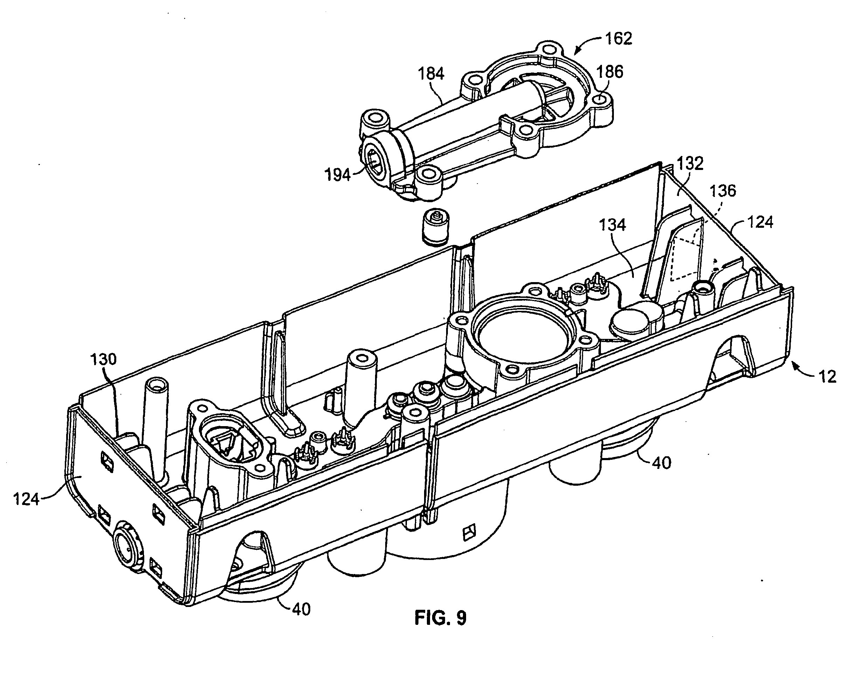

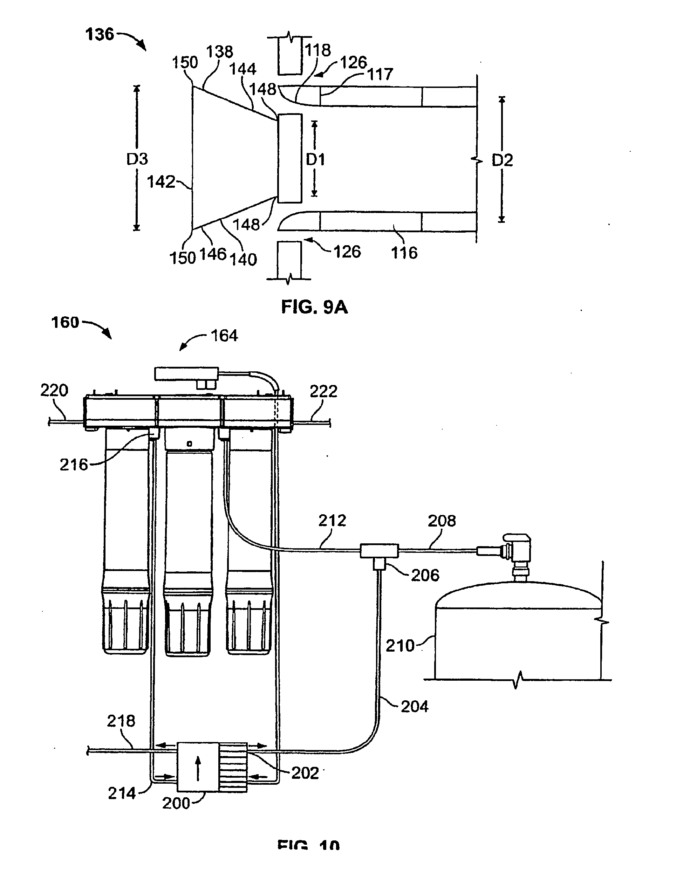

Fig. 9 shows a perspective view of the manifold 12 including the two end walls 124 each having four openings 126. The openings 126 are arranged in pairs, one above the other. For example, lower opening 126 and upper opening 126 comprise one pair. Each pair of openings 126 includes a pair of upright walls 130 in a spaced apart facing relationship. The upright walls 130 are shown extending from the interior surface 132 of the end wall 124 and the lower surface 134 of the manifold head 12. A flange 136 extends from the inner surface 132 of the end wall 124 towards the interior compartment of the manifold head 12. The flange 136 includes an upper ramp 138 and a lower ramp 140. The flange 136 includes a forward edge 142 and first and second side edges 144, 146. The forward edge 142 is generally parallel to the end wall 124. The first side edge 144 and second side edge 146 form the upper ramp and lower ramp 138, 140. The upper ramp 138 and lower ramp 140 diverge from one another in a direction away from the inner interior surface 132 towards the interior compartment of the manifold head 12. One of the four flanges 136 is shown in phantom in Fig. 9. The ramps 138, 140 include a proximal end 148 and a distal end 150. The proximal end 148 is located slightly away from the edge of the opening 126. The distal end 150 is spaced in an interference relationship regarding alignment of the opening 126. Fig. 9A shows additional detail.

With reference to Fig. 8, it will be appreciated that as the clip 110 is inserted into the openings 126 of the manifold head 96 to the right of the figure, the slanted edge 118 of each of the resilient arms 112 will be deflected by the respective ramp 138, 140. Once the clip 110 is fully inserted through the four openings 126, the slot 116 will extend past the distal end 150 and the two arm pairs will clamp about the respective distal end 150 with the edge of the slot 116 coming into locking engagement with the distal end 150 of the ramp 138, 140. Meanwhile, the tubular portion 120 will be received by the tube fitting connector 152 for sealing engagement. The other modular manifold head 104 will be coupled in similar manner.

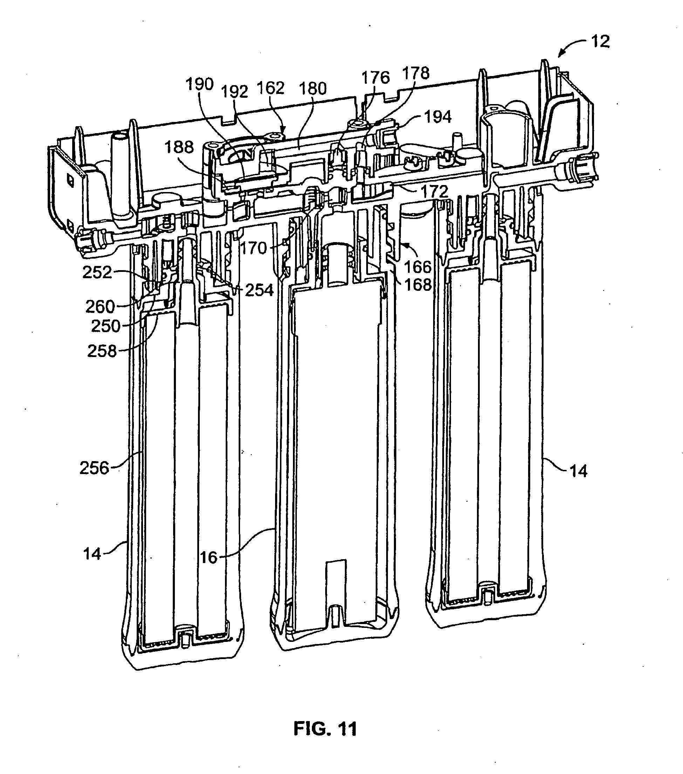

Fig. 10 shows a graphical representation of a water treatment system 160 wherein an automatic shut-off valve cover 162 (see Figs. 5 and 9) may be removed and replaced with another cover 164 adapted to accommodate a permeate pump application. With reference to Fig. 11, a cross-section of a water treatment system is shown including the modular manifold head 12, first cartridge 14, reverse osmosis cartridge 16 and second filter cartridge 14. The manifold head 12 is shown to include a connection fitting 166 for receiving the respective connection fitting 168 of the reverse osmosis cartridge 16. The manifold head 12 includes a first manifold access port 170 for coupling to an output of a reverse osmosis cartridge 16, a second manifold access port 172 coupled to an output of a reverse osmosis stage. A non-permeate pump cover 162 is adapted to seal the first and second access ports 170, 172 for a non-permeate pump application. A permeate pump cover 164 is adapted to also seal the first and second access ports 170, 172 and includes a permeate pump output port 174 which receives a tube fitting connector 175. The permeate pump cover 164 includes a first access and a second access port 176, 178 and a flow channel 180 in communication with the first and second access ports, as well as the permeate pump output port 174. A check valve assembly is located in the first access port 176 for coupling the output of the reverse osmosis cartridge 16. The second cover 164 includes a substantially planer body portion 184 which defines a first end and a second end. Mounting holes 186 are provided for fastening the cover to the manifold head.

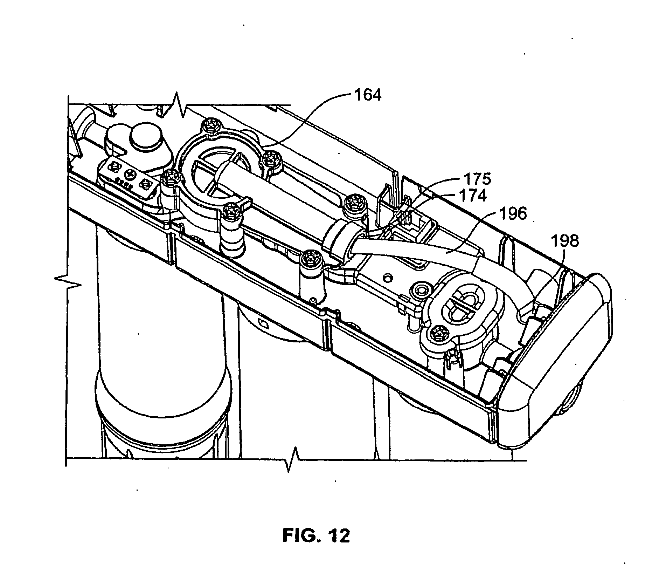

The manifold includes a lower diaphragm receptacle portion 188 having an opened upper portion. The second cover 164 includes an upper diaphragm receptacle portion 190 for mating with the opened upper portion to form a diaphragm cavity which receives a diaphragm. The upper diaphragm receptacle portion 190 includes an opening 192 in fluid communication with the fluid channel 180. The manifold head includes a flow channel coupled to an output port of a pre-filter stage and an input port of the reverse osmosis stage, wherein the flow channel is in fluid communication with the lower diaphragm receptacle portion 188 of the manifold head. It will appreciated that the water treatment system may be assembled at the factory with a non-permeate pump cover 162, wherein the plug 194 is provided at the permeate pump output port 174. A retrofit kit may be provided wherein the first cover 162 is removed and replaced with the second cover 164 having the tube fitting connector 175. A quarter inch tubing 196 may then be coupled to the tube fitting connector 175 and extend through a routing hole 198 as shown in Fig. 12. The tubing 196 extends downward and to a permeate pump 200 as shown in Fig. 10. The permeate pump 200 has a permeate outport 202 having a tubing 204 which runs to a T-connector 206. The T-connector 206 has a further tubing 208 coupled to a storage tank 210, as well a tubing 212 coupled back to the manifold head. The brine side of the permeate pump includes a brine in 214 from the drain flow 216 of the manifold head and a brine out tubing 218 which couples to the drain point. For sake of completeness, the tubing 220 is also shown coming from the supply inlet and tubing 222 is shown going to the faucet.

The installation kit includes at a minimum the second cover 164 and further may include a replacement check valve, as well replacement O rings, tubing, fasteners and installation instructions.

Fig. 11 also shows the filter cartridge 14 having a reduced gap at the connection fitting 32 in order to minimize spillage during changing of the filter cartridge. The novel features of the filter cartridge are explained below. However, it will be apparent that the features can be incorporated into the reverse osmosis cartridge as well.

The filter cartridge 14 includes external cartridge housing 22 having a cylindrical portion with a top portion and a bottom portion. The bottom portion has a closed end. The top portion includes a shoulder 250 having a generally cylindrical neck portion 252 extending upward from the shoulder 250. The cylindrical neck portion 252 defines a portion of a connection fitting. The cylindrical neck portion 252 defines a cylindrical bore having a cylindrical bore wall which defines a first diameter. The cylindrical bore wall includes an annular ring 254 protruding from the wall and defining a second diameter which is smaller than the first diameter. An internal cartridge housing 256 includes a top portion with a shoulder 258, a tube portion 260 extending upward from the internal shoulder 258, and the tube portion 260 defining an outlet bore. The tube portion 260 defines an outer diameter having a third diameter, wherein the third diameter is smaller than the first and second diameter. The tube portion 260 and the annular ring 254 define a cartridge inlet having an annular gap. It will be appreciated that the annular gap is minimized by this design and thereby reduces the likelihood of spillage. The manifold head is adapted to conform with the filter cartridge 14. In particular, the manifold head includes a connection fitting 40 which includes an internal annular collar having a length defined such that when the cartridge 14 is assembled to the manifold, the internal annular collar extends around the tube portion 260 and up to the annular ring, with a minimum spacing for tolerance.

## Claims

1. A locking mechanism for an encapsulated manifold and cartridge, the locking mechanism comprising:
- an encapsulated manifold (12) having a connection fitting (40), the connection fitting (40) having a threaded outer annular collar (42) and an inner annular collar (44), the inner annular collar (44) having an annular lip (46); and
- a cartridge (14) having a connection fitting (32), the connection fitting (32) having a threaded outer annular collar (24) for mating with the threaded outer annular collar (42) of the manifold (12), the connection fitting (32) of the cartridge (14) also having a cylindrical wall (34) located within the threaded outer annular collar (24) of the cartridge (14);
**characterized in that** the inner annular collar (44) further comprises at least one longitudinal slot (48) extending from the lip (46) along a portion of the annular collar (44), the cylindrical wall (34) of the cartridge having at least one longitudinal extending bead (36) which is received by the respective slot (48) upon the cartridge (14) being threadingly fastened to the manifold to a fully secured position.

2. The locking mechanism of claim 1, wherein the longitudinal extending bead (36) engages the annular lip (46) approximately 1/8 of a turn prior to the fully secured position.

3. The locking mechanism of claim 1, wherein the longitudinal extending bead (36) has a length and includes a leading end (38) which is longitudinally spaced apart from the manifold (12) a first distance with the cartridge (14) in the fully secured position, and a second distance with the cartridge (14) approximately 1/8 of a turn prior to the fully secured position, and wherein the difference between the first distance and the second distance is approximately the length of the longitudinal extending bead (36).

4. The locking mechanism of claim 1, wherein each connection fitting (32, 40) includes a double lead thread (26) having a circumference, a first thread and a second thread, the first and second threads being interwoven and extending around approximately of the circumference, wherein the first thread is offset from the second thread approximately 180 degrees.

5. The locking mechanism of claim 1, wherein the manifold (12) includes four longitudinal slots (48) extending from the lip (46) along a portion of the annular collar (44) and equally spaced apart circumferentially about the annular collar (44), and the cartridge (14) includes four longitudinal extending beads (36) extending along the cylindrical wall (34), the four longitudinal extending beads (36) are equally spaced about the cylindrical wall (34), each of the longitudinal extending beads (36) is adapted to be received by a respective slot (48) with the cartridge (14) in the fully secured position.

## Patentansprüche

1. Verriegelungs-Mechanismus für einen umschlossenen Verteiler mit Kartusche, umfassend einen umschlossenen Verteiler (12), der einen Anschlußfitting (40) aufweist, welcher einen mit Gewinde versehenen, äußeren, ringförmigen Kragen (42) und einen inneren, ringförmigen Kragen (44) hat, wobei der innere, ringförmige Kragen (44) mit einer ringförmigen Lippe (46) versehen ist; und ferner umfassend eine Kartusche (14) mit einem Anschlußfitting (32), der einen mit Gewinde versehenen, äußeren, ringförmigen Kragen (24) aufweist, welcher zu dem mit Gewinde versehenen, äußeren, ringförmigen Kragen (42) des Verteilers (12) paßt, wobei der Anschlußfitting (32) der Kartusche (14) des weiteren mit einer zylindrischen Wand (34) versehen ist, die in dem mit Gewinde versehenen, äußeren, ringförmigen Kragen (24) der Kartusche (14) angeordnet ist, **dadurch gekennzeichnet, daß** der innere, ringförmige Kragen (44) darüber hinaus wenigstens einen länglichen Schlitz (48) aufweist, der sich von der Lippe (46) längs eines Teils des ringförmigen Kragens (44) erstreckt, und daß die zylindrische Wand (34) der Kartusche mit wenigstens einer sich in Längsrichtung erstreckenden Wulst (36) versehen ist, die von dem entsprechenden Schlitz (48) aufgenommen wird, wenn die Kartusche (14) durch Verschrauben an dem Verteiler befestigt wird, so daß eine absolut gesicherte Stellung erreicht wird.

2. Verriegelungs-Mechanismus nach Anspruch 1, **dadurch gekennzeichnet, daß** der sich in Längsrichtung erstreckende Wulst (36) um annähernd 1/8 einer Umdrehung mit der ringförmigen Lippe (46) in Eingriff tritt, bevor die vollständig gesicherte Stellung erreicht wird.

3. Verriegelungs-Mechanismus nach Anspruch 1, **dadurch gekennzeichnet, daß** der sich in Längsrichtung erstreckende Wulst (36) eine Länge und ein vorderes Ende (38) hat, das in Längsrichtung in einem ersten Abstand von dem Verteiler (12) neben diesem angeordnet ist, wenn sich die Kartusche (14) in der vollständig gesicherten Stellung befindet, und mit dem vorderen Ende in einem zweiten Abstand, wenn sich die Kartusche (14) um annähernd 1/8 einer Drehung vor der vollständig gesicherten Stellung befindet, und wobei der Unterschied zwischen dem ersten Abstand und dem zweiten Abstand annähernd der Länge der sich in Längsrichtung erstreckenden Wulst (36) entspricht.

4. Verriegelungs-Mechanismus nach Anspruch 1, **dadurch gekennzeichnet, daß** jeder Anschlußfitting (32, 40) ein nicht ausgeformtes Doppelgewinde (26) mit einem Umfang, einem ersten Gewinde und einem zweiten Gewinde aufweist, wobei das erste und das zweite Gewinde miteinander verknüpft sind und sich rund um annähernd den Umfang erstrecken, so daß das erste Gewinde von dem zweiten Gewinde annähernd um 180 ° versetzt ist.

5. Verriegelungs-Mechanismus nach Anspruch 1, **dadurch gekennzeichnet, daß** der Verteiler (12) mit vier sich in Längsrichtung erstreckenden Schlitzen (48) versehen ist, ausgehend von der Lippe (46), längs eines Teils des ringförmigen Kragens (44) und gleichmäßig beabstandet nebeneinander und um den Umfang des ringförmigen Kragens (44), und daß die Kartusche (14) vier sich in Längsrichtung erstreckende Wülste (36) aufweist, die entlang der zylindrischen Wand (34) laufen, wobei die vier sich in Längsrichtung erstreckenden Wülste (36) um die zylindrische Wand (34) gleichmäßig beabstandet sind und jede sich in Längsrichtung erstreckende Wulst (36) von einem entsprechenden Schlitz (48) aufgenommen werden kann, wenn sich die Kartusche (14) in der vollständig gesicherten Stellung befindet.

## Revendications

1. Mécanisme de blocage pour un collecteur encapsulé et une cartouche, le mécanisme de blocage comprenant :
- un collecteur encapsulé (12) ayant un raccord de connexion (40), le raccord de connexion (40) ayant un collier annulaire extérieur à pas de vis (42) et un collier annulaire intérieur (44), le collier annulaire intérieur (44) ayant une lèvre annulaire (46) ; et
- une cartouche (14) ayant un raccord de connexion (32), le raccord de connexion (32) ayant un collier annulaire extérieur à pas de vis (24) pour s'accoupler avec le collier annulaire extérieur à pas de vis (42) du collecteur (12), le raccord de connexion (32) de la cartouche (14) ayant également une paroi cylindrique (34) située à l'intérieur du collier annulaire extérieur à pas de vis (24) de la cartouche (14) ;
**caractérisé en ce que** le collier annulaire intérieur (44) comprend encore au moins une fente longitudinale (48) s'étendant depuis la lèvre (46) le long d'une portion du collier annulaire (44), la paroi cylindrique (34) de la cartouche ayant au moins un bourrelet (36) s'étendant longitudinalement qui est reçu par la fente respective (48) lorsque la cartouche (14) est fixée par vissage sur le collecteur jusqu'à une position totalement attachée.

2. Mécanisme de blocage selon la revendication 1, dans lequel le bourrelet (36) s'étendant longitudinalement engage la lèvre annulaire (46) sur approximativement 1/8^{e} de tour avant la position totalement attachée.

3. Mécanisme de blocage selon la revendication 1, dans lequel le bourrelet (36) s'étendant longitudinalement a une longueur et inclut une extrémité de tête (38) qui est espacée longitudinalement en écartement du collecteur (12) sur une première distance avec la cartouche (14) dans la position totalement attachée, et une seconde distance avec la cartouche (14) à approximativement 1/8^{e} de tour avant la position totalement attachée, et dans lequel la différence entre la première distance et la seconde distance est approximativement la longueur du bourrelet (36) s'étendant longitudinalement.

4. Mécanisme de blocage selon la revendication 1, dans lequel chaque raccord de connexion (32, 40) inclut un pas de vis à double filet (26) ayant une circonférence, à savoir un premier filet et un second filet, le premier et le second filet étant entremêlés et s'étendant approximativement autour de la circonférence, et le premier filet est décalé d'approximativement 180° du second filet.

5. Mécanisme de blocage selon la revendication 1, dans lequel le collecteur (12) inclut quatre fentes longitudinales (48) s'étendant depuis la lèvre (46) le long d'une portion du collier annulaire (44) et également espacés en écartement circonférentiellement autour du collier annulaire (44), et la cartouche (14) inclut quatre bourrelets (36) s'étendant longitudinalement le long de la paroi cylindrique (34), les quatre bourrelets (36) s'étendant longitudinalement sont également espacés autour de la paroi cylindrique (34), et chaque bourrelet (36) s'étendant longitudinalement est adapté à être reçu par une fente respective (48) avec la cartouche (14) dans la position totalement attachée.
